# EUROPÄISCHE PATENTANMELDUNG

(11) **EP 3 838 974 A1**
(43) Veröffentlichungstag der Anmeldung: **23.06.2021**
(21) Anmeldenummer: 20000458.8
(22) Anmeldetag: 13.12.2020
(51) Int. Cl.: C08J 9/00, B29C 44/20, C08J 9/12, C08J 9/14, C08L 25/06, C08L 97/02, C08J 9/16, C08J 9/232

(54) **EINSATZ VON LIGNIN ALS HAUPTBESTANDTEIL FÜR EXTRUDIERTEN UND EXPANDIERTEN BIOPOLYMERSCHAUM**

(30) Priorität: 18.12.2019 DE 102019008719; 13.10.2020 DE 102020006300
(71) Anmelder: Jackon Applications GmbH, 23970 Wismar (DE)
(72) Erfinder: PLATE, Mark, 21335 Lüneburg (DE); TANK, Claus, 23580 Lübeck (DE); FALGE, Joachim, 23970 Wismar (DE)
(74) Vertreter: Kaewert, Klaus

(57) **Zusammenfassung**

Nach der Erfindung wird Lignin für die Herstellung eines Polystyrolschaums eingesetzt.

## Beschreibung

Die Erfindung betrifft extrudierte und expandierte Schaumprodukte aus ataktischem Polystyrol, auch als Standardpolystyrol bezeichnet. Insbesondere betrifft die Erfindung die Herstellung von XPS-Platten und EPS-Platten unter Verwendung von Lignin bzw. Ligninderivaten.

Lignin ist ein Biopolymer. Biopolymere bestehen zu einem wesentlichen Teil oder ausschließlich aus nachwachsenden Rohstoffen, während "normale" Kunststoffe aus petrochemischen Rohstoffen hergestellt werden. Zusätzlich wird in deren Funktionalität nach biologisch abbaubar und nicht biologisch abbaubar unterschieden. Biologisch abbaubare, petrochemische Kunststoffe zählen damit nicht mehr zu Biopolymeren, wie dies historisch meist mit Biokunststoffen verbunden wurde. Die biologische Abbaubarkeit ist damit kein zwingendes Kriterium für Biopolymere, sondern lediglich eine spezielle Eigenschaft verschiedener Bio- aber eben auch petrochemischer Kunststoffe.
In Bauprodukten haben Biopolymere bisher zumindest keine kommerzielle Anwendung gefunden.

Lignine fallen in großem Umfang bei der Cellulosegewinnung als modifizierte Lignine an und unterscheiden sich u.a. in ihren Molekulargewichten und organischen Schwefeltanteilen. Dabei werden die Lignine als Nebenprodukt der Cellulosegewinnung angesehen.
Es gibt nicht nur so viele Lignine wie Pflanzenarten einschließlich Baumarten, Büschen, Getreide, Gras und vieles mehr. Art und Umfang des Lignins hängen darüber hinaus von dem jeweiligen Standort ab. Hinzu kommen die Unterschiede, die sich durch die Aufbereitung der Pflanzen durch Trennung von Cellulose und Lignin mit verschiedenen Verfahren zur Cellulosegewinnung ergeben. Das vervielfacht noch die Variationen von modifizierten Ligninen. Die extreme Bandbreite der möglichen Variationen wird an den Grenzen möglicher Molekulargewichte deutlich. Die beiden am häufigsten angewendeten Verfahren zeigen Molekulargewichte, deren oberer Grenzwert um das jeweils 20fache bzw. 30fache größer als der untere Grenzwert ist.
Die am häufigsten angewendeten Verfahren sind das Sulfatverfahren und das Sulfitverfahren. Aus den Verfahren gehen die beiden bezeichneten LigninTypen Kraftlignin sowie das Ligninsulfonats hervor.

| | **Verfahren Sulfat** | **Verfahren Sulfit** | **Verfahren Organosolv** |
|---|---|---|---|
| **Typ** | Kraft-Lignin | Ligninsulfonat | Organosolv Lignin |
| **Molekulare Massen [g/mol]** | 980 - 20.000 | 2.200 - 63.500 | 1.000 - 2.000 |
| **Sulfonat Gruppen [%]** | - | 1 - 3 | - |
| **org. Schwefelanteil** | 1 - 2 | 4 - 8 | keine |
| | | | |
| **Funktionsgruppen** | viele phenolische OH | wenige phenolische OH | viele phenolische OH |

Die Fachwelt ist seit langem bemüht, die bei der Cellulose anfallenden Lignine/Ligninderivate einer sinnvollen Verwendung zuzuführen. Der Erfolg dieser Bemühungen ist jedoch beschränkt. Aus diesen Bemühungen sind handelsübliche Ligninderivate entstanden, in der Hauptsache das Kraft-Lignin und das Ligninsulfonat.

Standardpolystyrole sind ataktische Polystyrole und zugleich thermoplastische Kunststoffe, die unter Erwärmung erweichen und sich in dem Erweichungszustand verformen lassen und nach Abkühlung die erlangte Form behalten. Dieser Vorgang ist oft wiederholbar.
Die Vicattemperatur von Standardpolystyrol liegt je nach Produkt zwischen 80°C und 110°C. Bei der Extrusion von Polystyrol findet deshalb im Extruder eine Erweichung des festen Polystyrols statt, bevor dies bei weiterer Wärmezufuhr zu einer flüssigen Polystyrolschmelze verflüssigt. Gleichwohl sprechen Extruderfachleute auch beim Standardpolystyrol von einem Aufschmelzen.
Es gibt auch andere Polystyrole mit anderen Eigenschaften, insbesondere mit einem ausgewiesenen Schmelzbereich. Soweit im Folgenden ein Polystyrol genannt ist, handelt es sich um das Standardpolystyrol.

Die Standardpolystyrole finden in großem Umfang als Rohstoff für Dämmplatten im Baubereich Anwendung.

Der Rohstoff Polystyrol wird mit Additiven und Füllstoffen verarbeitet. Die Additive sollen dem gewünschten Produkt bestimmte Eigenschaften geben; zum Beispiel erhöhte Festigkeit und/oder erhöhte Alterungsbeständigkeit und/oder erhöhte Elastizität oder eine höhere Wärmebelastbarkeit. Des Weiteren können die Additive auch dazu dienen die Verarbeitung zu erleichtern.

Die Additive können andere Kunststoffe, insbesondere Polystyrol-Co-Polymere sein, diese werde bis zu maximal 10Gew% bezogen auf die Polystyrolmenge zugegeben. Zu diesen Polystyrol-Co-Polymere zählt zum Beispiel Polystyrol-Polybutadien, dass die Schlagzähigkeit von Polystyrol erhöht.

Die Füllstoffe dienen dazu, den Kunststoff zu strecken.

Die Qualität der Verarbeitung hängt sehr häufig von der Homogenisierung der Mischung ab. Die Homogenisierung kann dabei durch Compounds oder Kompaktieren erleichtert werden.
Die Compounds beinhalten eine Vormischung. Die Vormischung kann sich auf wenige Mischungsanteile beschränken oder auch den größten Teil der Einsatzmischung umfassen oder sogar alle Mischungsanteile umfassen. Die Vormischung kann im Wege der Herstellung von Compounds erfolgen. Dabei werden mindestens zwei Mischungsanteile zusammen gebracht. Es können im Compound auch mehr Mischungsanteile zusammen gebracht werden. Von Vorteil ist, wenn die Compounds mindestens einen Teil der für die Mischung vorgesehenen Polystyrolmenge umfassen. Dies erleichtert die Vermischung/Einmischung in die übrige Polystyrolmenge. Für die Vormischung können übliche Mischer verwendet werden. Auch Extruder sind als Vormischer geeignet. Die aus dem Vormischer anfallende Mischung wird granuliert. Die Abmessung des Granulats wird so gewählt, daß bei notwendiger Einmischung in eine Restmenge des Einsatzmaterials keine Entmischung entsteht. Die notwendige Abmessung des Granulats läßt sich mit wenigen Versuchen austesten. Eine notwendige Vergrößerung oder Verkleinerung des Granulats zur Vermeidung der Entmischung wird durch einen Wechsel der Düsenplatte erreicht. Die Düsenplatte besitzt eine Vielzahl von entsprechenden Öffnungen, durch die das durch die Vormischung entstandene Material durchgedrückt wird.

Bei der Homogenisierung kann auch bloßes Kompaktieren staubförmiger oder feinkörniger Mischungsbestandteile, zu denen auch handelsübliches Lignin/Ligninderivat gehört, helfen. Einfache Kompaktierungsvorrichtungen sind Walzen, zwischen denen die betreffenden Mischungsanteile zusammen gepresst werden, so daß ein plattenartiges Zwischenprodukt entsteht, das zur Erzielung geeigneter Partikelgrößen wieder gebrochen wird.

Alternativ können bekannte Pelletierungseinrichtungen zum Einsatz kommen, in denen gezielte Partikelgrößen erzeugt werden.

Mit XPS-Platten werden extrudierte Polystyrolhartschaumplatten bezeichnet, die mittels eines Extruders hergestellt werden, wobei
- die Einsatzstoffe, einschließlich Additive und Füllstoffe in den Extruder aufgegeben werden,
- das Polymergemisch aufgeschmolzen und mit den anderen Einsatzstoffen vermischt wird
- die Treibmittel in die flüssige Polymerschmelze eingegeben werden
- aus dem Extruder durch eine Breitschlitzdüse ein endloser Schmelzestrang in eine Umgebung geringeren Druckes austritt und aufschäumt
- der nach Formgebung in einem Kalibrator und
- nach ausreichender Abkühlung als Extrusionsstrang spanabhebend bearbeitet wird
- und zu Platten abgelängt wird.

Mit expandierte Polystyrolschaum-Platten (EPS) werden Polymerschaumplatten bezeichnet, die aus Polystyrolschaumpartikeln hergestellt werden. Die Schaumpartikel werden in einem Formteilautomaten miteinander verschweißt. Dabei kann zunächst ein Schaumblock entstehen, der anschließend zu Platten aufgeteilt wird.
Die für die EPS-Platten vorgesehenen Schaumpartikel werden üblicherweise in großen Mengen in Autoklaven hergestellt.
Darüber hinaus gibt es ein weiteres Verfahren für die Gewinnung von Schaumpartikeln für EPS-Platten. Dieses Verfahren findet vorzugsweise für kleinere Mengen Anwendung und sieht vor:
- Schmelzeerzeugung wie bei der extrudierten Polystyrolschaum-Platten Herstellung mit eingeschlossenem Treibmittel
- Austritt verschiedener endloser feiner Schmelzestränge mittels kleiner Düsen,
- wobei die Schmelze nach dem Austritt aus dem Extruder in eine Umgebung hohen Druckes gelangt, so dass ein Aufschäumen verhindert wird
- wobei die Schmelzestränge unter Wasser zu Mikrogranulat, das mit Treibmittel beladen ist, zerkleinert werden.
   Das Wasser bewirkt eine Abkühlung, so dass das Treibmittel in dem Granulat eingefroren wird. Im so eingefrorenen Zustand hat das Granulat eine für den Transport und die Lagerung günstige Form. Vor dem Einsatz in einem Formteilautomaten muss das Granulat aufgeschäumt werden. Das kann in einem oder mehreren Schritten erfolgen, bis aus dem Granulat Schaumpartikel mit den gewünschten Eigenschaften entstanden sind.

Vorzugsweise sind die kleinen Düsen in einer Platte am Austrittsende des Extruders angeordnet. Diese Platte kann als Düsenplatte bezeichnet werden. Die durch Extrusion von dünnen Schmelzesträngen und deren anschließende Granulierung entstanden Schaumpartikel sind wie im Autoklaven hergestellten Schaumpartikel geeignet zum Einsatz in Formteilautomaten. Das schließt die Herstellung von transportgünstigem, treibmittelhaltigen kleinteiligem Granulat und dessen Vorschäumen in der Betriebsstätte ein, in der die Herstellung von Formteilen und Blöcken vorgesehen ist. In dieser Betriebsstätte werden die Schaumpartikel zu unterschiedlichen Formteilen oder Blöcken verarbeitet. Das geschieht nach Einfüllen der Schaumpartikel in den Formteilautomaten durch Bedampfung der Schaumpartikel mit Heißdampf. Durch diese Bedampfung erweichen die Schaumpartikel an der Oberfläche, so dass die verschiedenen Partikel unter dem Druck in dem Formteilautomaten miteinander verschweißen. Nach ausreichender Abkühlung wird das Formteil oder der Block aus dem Formteilautomaten entnommen. Für die Verarbeitung zu EPS-Platten wird der Block in Platten geschnitten.

Die XPS-Platten und EPS-Platten können ein Raumgewicht kleiner 100kg pro Kubikmeter, vorzugsweise kleiner 70kg pro Kubikmeter und höchst bevorzugt kleiner 40kg pro Kubikmeter aufweisen. Vom Raumgewicht wird gesprochen, weil sich das Gewicht auf das Raummaß bezieht. Das Raumgewicht kennzeichnet die Dichte des Schaumes.

Der Extruder kommt in verschiedenen Bauarten vor, besonders häufig als Einschneckenextruder. Dabei läuft in einem Gehäuse eine Schnecke um, welche den Kunststoff zur Extrusionsdüse transportiert.
Eine andere häufig vorkommende Bauart ist der Doppelschneckenextruder. Dabei sind zwei Schnecken in einem Gehäuse parallel zueinander vorgesehen, die entweder gleichsinnig oder gegenläufig rotieren und dabei ineinander kämmen.
Eine seltenere Bauart ist der Planetwalzenextruder, der aus einem innen verzahnten fest angeordneten Gehäuse, einer mittig umlaufenden Zentralspindel und verschiedenen Planetspindeln besteht, die zwischen dem Gehäuse und der Zentralspindel um die Zentralspindel umlaufen. Die Verzahnung der Planetspindeln kämmt mit der Verzahnung der Zentralspindel und der Innenverzahnung des Gehäuses. Die Zentralspindel wird üblicherweise angetrieben. Die Planetspindeln gleiten an einem Anlaufring des Gehäuses und sind im Übrigen von den Zähnen der Zentralspindel und der Innenverzahnung des Gehäuses bzw. der Buchse gehalten.

Allen Verfahren zur Herstellung von Kunststoffschaum mittels Extrusion ist gemeinsam, dass eine Schmelze erzeugt und mit Treibmittel versetzt wird. Das Treibmittel wird nach Entstehen der Schmelze als Flüssigkeit in den Extruder eingespritzt. Im Extruder wird das Treibmittel mit der Schmelze vermischt. Im Extruder verhindert der dort herrschende Druck ein Aufschäumen des Kunststoffes.

Üblicherweise ist für zeitgemäße XPS-Platten wie auch für zeitgemäße EPS-Platten ein Flammschutzmittel erforderlich. Das Flammschutzmittel wird zusammen mit den anderen Additiven und dem Polystyrol in Mischung gebracht.
Manche Flammschutzmittel können umweltgefährdend und/oder gesundheitsgefährlich sein. Manche Flammschutzmittel sind mit dem zu schäumenden Kunststoff nicht kompatibel. Besondere Schwierigkeiten ergeben sich bei der Einmischung von anorganischen Flammschutzmitteln in Polymeren in ausreichender Konzentration zur Erlangung der gewünschten Brandklasse des Produkts. Mit der Einstufung in Brandklassen werden XPS-Platten und EPS-Platten unter Normbedingungen einer Flamme ausgesetzt. Je nach Brandklasse breitet sich die Flamme unterschiedlich weit aus oder bereitet sich nicht aus. Bei Kunststoffen ist gefährlich, daß sich der Brand mit hoher Geschwindigkeit ausbreiten kann, sobald der Kunststoff durch entsprechende Erwärmung verflüssigt und in der flüssigen Form durch eine Flamme entzündet wird.

Die Flammschutzmittel werden der Polymermatrix zugesetzt, um den Verbrennungsprozess zu hemmen, zu unterdrücken und zu beenden. Sie wirken hauptsächlich auf die Entzündbarkeit des Materials oder verringern die Flammenausbreitung. Dabei sollen sie andere Eigenschaften des Polystyrols, wie z.B. die Mechanik oder das Aussehen (zum Beispiel die Transparenz, Farbe) möglichst wenig oder gar nicht beeinflussen.

### Im Einzelnen:

Nach Entzünden setzt das brennende Material Wärme frei und verursacht eine zusätzliche Temperaturerhöhung. Dadurch werden Pyrolyseprozesse beschleunigt und weiteres brennbares Material entzündet. Für die Geschwindigkeit der Brandentwicklung sind die Wärmefreisetzung (Wärmeentwicklung) und Entzündbarkeit des Materials und die dadurch bedingte Flammenausbreitung verantwortlich.

Durch starke Wärmeentwicklung und große Gasfreisetzung kann im Laufe des Brandes (besonders bei Raumbränden) ein Gasgemisch entstehen, das eine Brandausdehnung mit sehr hoher Geschwindigkeit verursacht. Dieses plötzliche Zünden und Abbrennen von Pyrolysegasen wird als Rauchgasdurchzünden/feuerüberschlagender Flashover bezeichnet.

Der Brand erreicht seine höchsten Temperaturen. Das gesamte brennbare Material (Brandlast) ist involviert (Branddurchdringung). Die Brandlast ist ausschlaggebend für das Ausmaß des Brandes und den daraus resultierenden Schaden. Erst aus der Erschöpfung einer der Brandkomponenten (brennbares Material oder Sauerstoff) resultiert das Abklingen des Brandes.

Die Flammschutzmechanismus hängen stark von der chemischen Struktur des Flammschutzmittels und seiner Wechselwirkung mit dem Polymer ab. Das grundlegende Verständnis der Struktur-Eigenschaftsbeziehungen ist die Grundvoraussetzung für die gezielte Entwicklung maßgeschneiderter Flammschutzlösungen und die Optimierung der Flammschutzmechanismen und -wirkung für eine bestimmte Anwendung.

Flammschutzmittel dienen zur Hemmung, im Idealfall zur Vermeidung der Entzündung, Flammenausbreitung und/oder Brandlast. Man kann zwischen physikalischen und chemischen Wirkungsweisen unterscheiden.

### Zu den chemischen Mechanismen:

Mittels einer Reaktion in der Gasphase wird durch das Flammschutzmittel der Radikalmechanismus unterbrochen und somit die Oxidationsreaktion gehemmt, die effektive Verbrennungsenthalpie des Materials sinkt. Dadurch wird der Wärmeeintrag der Flamme verringert und die Wärmefreisetzung reduziert.

Typische Radikalfänger sind halogenhaltige Flammschutzmittel auf Basis von Chlor oder Brom.

### Zu den physikalischen Mechanismen:

Die Abgabe von Wasser bewirkt eine Kühlung der Flamme. Die endotherme Abgabe nicht brennbarer Gase wie H₂O, CO₂ oder NH₃ verursacht eine Brennstoffverdünnung. Durch Erhöhung der Verdampfungsenthalpie und Reduzierung der effektiven Verbrennungsenthalpie kann dem Brand entgegengewirkt werden. Beispiele sind Aluminiumtrihydroxid (ATH), Magnesiumdihydroxid (MDH) und borhaltige Verbindungen.

Inerte Füllstoffe ersetzen brennbares durch nicht brennbares Material und bewirken in Bezug auf die Brennbarkeit eine Verdünnung des brennbaren Materials.

Nach einem älteren Vorschlag der DE102018003373 wird dem Polystyrol in geringem Umfang, vorzugsweise mit maximal 5Gew%, noch weiter bevorzugt bis maximal 3 Gew% und höchst bevorzugt bis maximal 2Gew% (bezogen auf die Einsatzmischung) depolymerisiertes Lignin zugemischt, um in Kombination mit weiteren Flammschutzmittel das Brandverhalten der Polystyrolschäume zu verbessern. Das depolymerisierte Lignin wird aus den handelsüblichen Ligninderivaten gewonnen. Dabei stehen das Kraft-Lignin und das Ligninsulfonat aus der Cellulosegwinnung für die Depolymerisierung als die am häufigsten vorkommenden Ligninderivaten im Vordergrund. Zum Depolymerisieren stehen verschiedene Verfahren theoretisch zur Verfügung. Bisher hat jedoch noch keines dieser Verfahren eine praktische Anwendung zum Depolymerisieren von Lignin bzw. Ligninderivaten gefunden.
Man erhofft sich aus der geringen Zumischung von depolymerisiertem Lignin/Ligninderivaten eine wirtschaftliche Verbesserung des Brandschutzes. Der Nachweis konnte zwar zur Machbarkeit, bisher jedoch noch nicht zur wirtschaftlichen Verbesserung des Brandschutzres an XPS- und EPS-Platten geführt werden.

Die DE 102019003009 beschreibt die Überlegung, daß auch die Zugabe einer großen Menge von depolymerisiertem Lignin/Ligninderivat machbar sein könnte.
Dabei hat man sich Mengen von vorzugsweise mindestens 60Gew%, noch weiter bevorzugt mindestens 70Gew% und höchst bevorzugt mindestens 80Gew% (bezogen auf die Einsatzmischung vorgestellt. Zugleich wurden geeignete Lignine/Ligninderivate vorgestelt. Zu den vorgestellten Verfahren gehören Lignine aus dem verunreinigungsfreie Refiner Verfahren und chemische Verfahren wie das Sulfatverfahren und das Sulfitverfahren sowie das Sodaverfahren. Weniger bedeutsame Ligninderivate kommen aus der Anwendung von Ethanol und Natronlauge oder Natriumsulfit und Ethanol oder Essigsäure und Ameisensäure und Wasserstoffperoxid sowie Ligninderivate aus einem enzymatischen Aufschluß.Au ch die DE102019003009 geht von der Verfügbarkeit verschiedener Verfahren zur Depolymerisierung aus. Im Vordergrund steht dabei die katalytische Hydrierung der Ligninderivate im Autoklaven. Zugleich wird aber festgestellt, daß der erreichbare Depolymerisierungsgrad im Laborversuch bei 2% von der Einsatzmenge pro Durchlauf liegt. Das hat in der DE102019003009 zu der Überlegung geführt, das teildepolymerisierte Ligninderivat solange im Kreis zu fahren, bis eine gewünschte vollständige Depolymerisierung erreicht ist. Ziel war, durch die Depolymerisation handelsüblicher Ligninderivate zu Lignen/Ligninderivaten mit einem mittleren Molekulargewicht von 1000 bis 10.000 g/mol zu kommen, gemessen nach GPC.
Bei der Messung erfindungsgemäßer Mischungen von Polystyrol mit Kraft-Lignin und Ligninsulfonat ist als Lösungsmittel übliches NMP (N-Methyl-2-pyrrolidon) verwendet worden. Es gibt auch eine Reihe anderer Lösungsmittel wie THF(Tetrahydrofuran), DMSO (Dimethylsulfoxid), DMF (Dimethylformamid) und DMAc (Dimethylacetamid). Die verschiedenen Lösungsmittel und deren Handhabung sind in den Betriebsanleitungen der GPC-Geräte erläutert.
Nach der Erfindung wird das aus einem Cellulosegewinnungsverfahren als Nebenprodukt anfallende Lignin/Ligninderivat unverändert in die erfindungsgemäße Mischung mit Polystyrol gebracht. Im Sinne der Erfindung zählt dabei
- eine durch Wärmebelastung des Lignins bei der Cellulosegewinnung entstehende Veränderung
- eine durch zwischenzeitliche Nachbehandlung (z.B. durch Trocknung und Aufmahlung) des aus der Cellulosegewinnung kommenden Lignings/Ligninderivat entstandene Veränderung
- eine durch Vorbehandlung des Lignins/Ligninderivats (z.B. durch Kompaktieren oder Compoundieren) des für die Mischung mit Polystyrol bestimmten Lignins/Ligninderivats entstandene Veränderung nicht, wenn die Wärmebelastung des Lignins oder Ligninderivats nicht höher als 145 Grad Celsius war. Bis zu dieser Temperaturgrenze sind die entstandenen Veränderungen in ihrer Wirkung für die Mischung mit Polystyrol vernachlässigbar. Bis zu dieser Temperatur ist der Einfluss auf die Molekularstruktur im Sinne der Erfindung vernachlässigbar.

Vorstehende Voraussetzung für das Gewinnungsverfahren erfüllen die in der Hauptsache vorkommenden Kraft-Lignine und Ligninsulfonate.
Es gibt auch andere Cellulosgewinnungsverfahren, durch die Lignine/Ligninderivate eine höheren Wärmebelastung als 145 Grad Celsius erfahren haben. Solchermaßen belastete Lignine/Ligninderivate bleiben bei der erfindungsgemäßen Auswahl unberücksichtigt.

Beim Nachbehandeln der aus der Cellulosegewinnung kommenden Lignine/Ligninderivate können Verfahren mit entsprechend geringer Verfahrenstemperatur gewählt werden bzw. kann die Verfahrenstemperatur reduziert werden. Gegebenenfalls hilft dabei eine Kühlung.
Die Vorbereitung von Lignin/Ligninderivat für die Mischung mit Polystyrol kann unterschiedlich sein. So kann zum Beispiel handelsübliches feinkörniges und auch staubförmiges Lignin/Ligninderivat durch Kompaktieren zu grobkörnigem Mischgut umgewandelt werden. Die Form der Körner kann in weiten Grenzen gewählt werden. Vorzugsweise wird eine für die Mischbarkeit mit anderen Mischungsbestandteilen günstige Form gewählt.
Selbst durch Kompaktieren aus Lignin oder Ligninderivaten entstehende Flakes können mit anderen Mischungsbestandteilen besser mischbar sein als staubförmiges bzw. feinkörniges Mischgut.
Das Kompaktieren erfolgt üblicherweise bei Raumtemperatur. Aber auch höhere Temperaturen sind unschädlich, wenn die erfindungsgemäße Temperaturgrenze eingehalten wird.

Beim Compoundieren wird davon ausgegangen, daß mindestens zwei Mischungsanteile zusammen geführt werden.

Beim Compoundieren in herkömmlichen Mischern/Rührern läßt sich trotz Aufschmelzen/Erweichen des Polystyrols die erfindungsgemäße Temperaturgrenze mit entsprechender Temperierung einhalten. Beim Compoundieren in einem Extruder sind herkömmliche Extrusionstemperaturen zwar höher. Die Extrusionstemperatur läßt sich jedoch durch Verringerung der Verformungsarbeit im Extruder und durch die übliche Temperierung im Extuder sicher unter der erfindungsgemäßen Temperaturgrenze halten.

Wahlweise wird zur Herstellung der für die Mischung von Lignin/Ligninderivaten mit Polystyrol vorteilhaften Lignin/Ligninderivate-Partikelgröße schon in der Nachbehandlung Einfluß genommen, wenn das Lignin/Ligninderivat als Nebenprodukt aus der Cellulosegewinnung anfällt. Das kann dadurch geschehen, dass nach dem Trocknen des Lignins/Ligninderivates und dem Brechen der enstehenden Platten vor der Feinaufmahlung des gebrochenen Gutes die für die Mischung mit dem Polystyrol geeigneten Partikelgrößen abgesiebt werden.

Wahlweise wird der Polymermatrix neben dem Lignin und dem Polystyrol ein weiteres thermoplastisches Polymer bis zu einem Anteil des weiteren thermoplastischen Polymers zugegeben, der nicht größer als 10Gew% der Polymermatrix ist.

Für die Herstellung von EPS-Platten aus Polystyrolschaumpartikeln findet das oben beschriebene Extrudieren des Polystyrols zu feinen Schmelzesträngen und deren Unterwassergranulierung Anwendung.

Das Einsatzmaterial ist das gesamte, dem Extruder zugeführte feste Material einschließlich Polystyrol, Zuschlägen, Additiven und sonstigen Mischungsanteilen.

Lignin und deren Derivate und deren Anwendungen für Formteile sind durch nachfolgende Veröffentlichungen an sich bekannt.
Im Einzelnen:
In der DE 102009050546 wird die Verwendung eines
Flammschutzmittels/Brandschutzmittels im Zusammenhang mit faserverstärktem Polystyrol vorgeschlagen. Dabei soll es sich um Naturfasern von Pflanzen handeln. Allerdings sollen Pflanzen ausgewählt werden, die noch nicht verholzt sind, also nur eine geringe Menge oder gar keine Menge Lignin enthalten. Damit weist die Druckschrift nicht auf Lignin, sondern von Lignin weg.

Die WO 2011047804 stimmt inhaltlich mit der DE 102009050546 überein.

Auch die WO 2017118765 beschreibt eine Ausrüstung von Fasern mit Flammschutz/Brandschutz zur Verwendung in Polystyrol, auch in einem geschäumten Produkt. Im Unterschied zu den in DE102009050546 beschriebenen Fasern sind nach der WO2017118765 Lignin haltige Fasern vorgesehen.

Die DE102017100313 stimmt inhaltlich mit der WO 2017118765 überein.

Die WO 2014184273 beschreibt zwar eine Polyolefinematrix mit einem eingemischten Lignin. Es handelt sich jedoch um einen Vorschlag zur Modifizierung von WPC (wood plastic composition), das als Holzersatz angesehen werden kann.

Die DE 102007054549 beschreibt auch eine Polyolefinmatrix für WPC mit einem eingemischten biobasierenden Kunststoff aus Lignin.

Die DE 2436166 aus dem Jahre 1974 beschreibt ein Flammschutzmittel für verschiedene Zwecke, unter anderem für den Schutz von Polystyrol. Der bekannte Flammschutz soll keine giftigen Gase bilden und lange Zeit anhalten. Der bekannte Flammschutz soll durch Schmelzen einer Ligninverbindung mit einer Harnstoffverbindung in der Hitze herstellbar ist. Als Ligninverbindung kommen Ligninsulfonsäure oder Ligninsulfonat in Frage. Als Harnstoffverbindung kommen Harnstoff oder Harnstoffderivate in Frage. Danach können die Massen mit einem thermoplastischen Kunststoff, einem Phosphorsäurederivat oder einem mehrwertigen Metallsalz vermischt werden. Die Ligninsulfonsäure (Lignosulfonsäure) kann hergestellt werden, indem man Lignin mit schwefliger Säure, Hydrogensulfit oder Sulfit umsetzt.

Nach der DE2436166 können bei der Neutralisation der Ligninsulfonsäure Alkalimetallsalze und Erdalkalimetallsalze entstehen; zum Beispiel mit Na, K, Mg, Ca, Ba oder Ammoniumsalze.
Die vorgesehenen Phosphorsäuren und Phosphorsäurederivate umfassen phosphorige Säure, unterphosphorige Säure, Phosphorsäure, Metaphosphorsäure, Polymetaphosphorsäure, Polyphosphorsäure und Alkalimetallsalze oder Erdalkalimetallsalze.
Das Verhältnis der verschiedenen Bestandteile liegt im Bereich 0,3 bis 1,0 Gewichtsteil des Harnstoffs oder der Harnstoffverbindung auf 1 Gewichtsteil der Ligninsulfonsäure oder des Ligninsulfonats.

Die vorliegende Erfindung hat sich dem Lignin/Ligninderivaten zugewandt, da Lignin/Ligninderivate in großen Mengen kostengünstig zur Verfügung stehen. Zugleich hat Lignin den Vorteil, die Lebensmitteltauglichkeit nicht zu gefährden.
Vorteilhafterweise steht das Lignin in ausreichender Menge und entsprechenden Preis für die Produktion eines Massenprodukts zur Verfügung.

Mit der Zugabe hoher Ligninmengen hat sich die Erfindung über Befürchtungen hinweggesetzt, dass aus solchen Mischungen für normgerechte EPS- und XPS-Platten kein brauchbarer Schaum entstehen kann. Die Brauchbarkeit hängt unter anderem von der Geschlossenzelligkeit des entstehenden Schaumes ab. Für die Schaumherstellung muss die Schmelze ein enormes Dehnverhalten aufweisen. Das Schmelzedehnverhalten hat unmittelbaren Einfluss auf die Schaumqualität. Je besser das Schmelzedehnverhalten ist, desto besser bilden sich die Schaumzellen und umso leichter ist ein geschlossenzelliger Schaum erreichbar. Dieses Dehnverhalten ist eine herausragende Eigenschaft des Polystyrols. Durch die Zumischung großer Mengen von Fremdstoffen wird die Polystyrolmenge in der Mischung entsprechend reduziert, so daß die hervorragende Dehnfähigkeit gefährdet erscheint. Überraschender Weise ist die Qualität des Schaumes auch bei größeren Mengen an Lignin/Ligninderivaten nicht beeinträchtigt. Außerdem lässt sich mit der erfindungsgemäßen Zumischung von Lignin/Ligninderivates auch eine geringe Dichte erreichen, ohne die Zellgröße nachteilig zu beeinflussen.
Es hat auch keine Entmischung des Lignins/Ligninderivate vom Polystyrol stattgefunden.

Die Unteransprüche beschreiben bevorzugte Ausführungsbeispiele.
Vorteilhaft sind folgende Merkmale:
- Das Kraftlignin mit einer Molekularmasse von 5.500 - 7.500 g/mol verwendet wird, das Wasser unlöslich ist und die daraus hergestellten Schaumplatten eine sehr geringe Wasseraufnahme aufweisen.
- Das Lingninsulfonat mit Molekularmassen von 9.000 - 11.000 g/mol verwendet wurde, dass eine hervorragende Mischbarkeit mit Polystyrol aufweist.
- dass der Mischung aus Lignin/Ligninderivat und synthetischen Polystyrol Vernetzer zugegeben werden, um die Wasserlöslichkeit bei Zumischung anderer Lignintypen zu reduzieren. Hier infrage kommenden Vernetzer sind zum Beispiel: organische Peroxid (die bei basischen Bedingungen stabile Vernetzungen erzeugen), organische Schwefel-Schwefelverbindungen, Schwefel (die im leicht sauren und neutralen Medium stabile Vernetzungen bilden) und Polycarbonsäureanhydride (z.B. Buttersäure-, Crotonsäure- und Pyromellitsäureanhydrid) oder Mischungen davon und Calciumhydroxid
- dass der Einsatzmischung keine üblichen Flammschutzmittel zugemischt werden müssen, um die Brandtests nach geltender Norm zu bestehen. Das wird auf die Wirkung des Lignins zurückgeführt.
   Wenn jedoch in der Zukunft noch größere Anforderungen an den Brandschutz/Flammschutz gestellt werden können dem Polystyrol/Lignin-Gemisch noch Flammschutzmittel aus nachfolgender Gruppe von Flammschutzmitteln zugesetzt werden kann:
   - Kohlenstoffhaltige Flammschutzmittel (z.B. Blähgraphit)
   - Phosphorhaltige Flammschutzmittel (z.B. roter Phosphor)
   - Phosphorverbindungshaltige Flammschutzmittel (z.B. Triphenylphosphat, Ammoniumphosphat, Polyphosphate, Calciumphosphat)
   - Stickstoffverbindungshaltige Flammschutzmittel (z.B. Melamincyanurat)
   - Metall-Oxide und/oder -Hydroxide (z.B. Calciumhydroxid, Aluminiumhydroxid, Kaolin, Böhmit, Magnesiumhydroxid, Zinkoxid)
   wobei die Zersetzungstemperatur derjenigen Flammschutzmittel, welche ihre flammhemmende Wirkung in der Hauptsache durch Zersetzung entwickeln, oberhalb der Verarbeitungstemperatur von Lignin liegt.
- die Verwendung von Blähgrafit als kohlenstoffhaltiges Flammschutzmittel und/oder durch die Verwendung von Magnesiumhydroxid oder Aluminiumhydroxid als Metall-Hydroxid.
- dass ein Blähgrafit verwendet wird, dessen Partikelgröße kleiner 1/10 des mittleren Zelldurchmessers des Polystyrolschaumes ist, vorzugsweise kleiner 1/50 und noch weiter bevorzugt kleine 1/100 des mittleren Zelldurchmesser des Polystyrolschaumprodukts ist.
- dass das Lignin/Ligninderivat und das Polystyrol unabhängig voneinander erwärmt werden und nach dem Aufschmelzen eine Vermischung stattfindet
- durch eine Zwangsführung feinkörniger und staubförminger Flammschutzmittel/Brandschutzmittel bei der Aufgabe in den Extruder erfolgt
- durch die Verwendung eines senkrecht über der Füllöffnung des Extruders stehenden weiteren Extruders mit einer Kühlung zum Eintragen des Lignins in den Extruder.
- eine Beheizung von in den Extruder eingefüllten feuchten Einsatzstoffen zur Verdampfung der Feuchte und anschließende Entfernung des Dampfes durch Entgasung vor dem Eintragen flüssiger Treibmittel
- dass zunächst ein Masterbatch aus einem oder mehreren Flammschutzmitteln mit einer Teilmenge des Polystyrols in Granulatform erzeugt wird und anschließend mit den übrigen Einsatzstoffen im Extruder zusammengeführt wird
- dass die zur Masterbatcherzeugung verwendete Teilmenge des Polymers höchstens 80Gew%, vorzugsweise höchstens 70Gew% und noch weiter bevorzugt höchstens 50Gew% der Polymermatrix ist.
- dass das Lignin/Ligninderivat vor seiner Zugabe zum Extrusionprozess kompaktiert wird, um eine gleichmäßige und staubreduzierte Dosierung zu ermöglich
- dass der Einsatzmischung für den Extruder weitere Additive (z.B. Calciumcarbonat/Calciumhydroxid, Polycarbonsäureanhydride, Aluminiumhydroxid, Magnesiumhydroxid) zur Verbesserung der Wasserbeständigkeit des Schaums zu ermöglichen. Das gilt bei der Verwendung von Ligninsulfonaten oder anderen wasserlöslichen Ligninen/Ligninderivaten. Die dabei vorgesehenen Zugabemengen betragen vorzugsweise 0,5 bis 10 Gew%, weiter bevorzugt 1 bis 8Gew% und höchst bevorzugt 1,5 bis 6 Gew%, bezogen auf die dem Extruder zugeführte gesamte Feststoffmenge.
   Vorteilhafterweise ist das Kraft-Lignin von sich aus nicht wasserlöslich, so dass bei diesem Lignin nicht mit einer unzulässigen Wasseraufnahme der Lignin-Polymerschäume zu rechnen ist.
   Außerdem erleichtert/verbessert die Zugabe von Calciumhydroxid die Herstellung und den Bestand einer Mischung aus geschmolzenem Polystyrol mit geschmolzenem Lignin/Ligninderivat. Insofern wirkt das Calciumhydroxid wie ein Emulgator. In dem durch Abkühlung verfestigten Zustand verbleibt die vorteilhafte Mischung.
   Bei einer GPC-Messung der vorteilhaften Mischung ergibt sich eine andere Molekularmassenverteilung als bei einer Mischung ohne Calciumhydroxid als Mischungsanteil.
- dass zum Beispiel aus der DE2811951 an sich bekannte Aluminiumhydroxid (ATH) oder Magnesiumhydroxid (MDH) zugesetzt. Diese zersetzt sich im Brandfall und kühlt dabei das Feuer ab.
   Dabei erlaubt die Kühlung üblicher Extruder eine kontrollierte Temperaturführung bei der Schaumherstellung unterhalb der Zersetzungstemperatur von ATH und MDH.
- dass wahlweise anstelle oder zusätzlich zu dem ATH oder MDH Blähgrafit zugesetzt wird. Das Blähgrafit erfährt im Brandfall eine große Ausdehnung, bildet eine schützende Intumeszenz-Schicht auf der Oberfläche und isoliert dadurch die Brandfläche vor dem weiteren Angriff von Flammen und verlangsamt die Brandausweitung und wirkt der Ausbreitung toxischer Gase und Rauch entgegen.

Das Blähgrafit führt nicht zugleich zu einer Ausdehnung der Schmelze, wenn die Blähgrafitpartikel in ihren Abmessungen kleiner als der Zelldurchmessser des Polystyrolschaumes ist. Vorzugsweise ist der Durchmesser der Blähgrafitpartikel kleiner als 1/10 des Zelldurchmessers vom Polystyrolschaum, noch weiter bevorzugt kleiner als 1/50 des Zelldurchmessers und höchst bevorzugt kleiner als 1/100 des Zelldurchmessers. Der Zelldurchmesser ist der mittlere Zelldurchmesser.

Die vorstehend beschriebenen Blähgrafitpartikel können bei der Schaumherstellung gut in die Zellwände eingebaut werden und sich in den Zellinnenraum ausdehnen.

Anstelle von oder zusätzlich zu Metallhydroxid und/oder Blähgraphit können auch Substanzen ausfolgender Aufstellung ausgewählt werden:
- Gestein vulkanischen Ursprungs (z.B. Bimsgestein)
- Blähton
- Fasern aus Glas oder Keramik
- Kreidegestein, (Calcit, Kalk, Calciumcarbonat)
- technischer Kalk
- Aluminiumsilikat (z.B. Kaolinit, Kaolin)
- Tonminerale, Schichtsilikate (Hectorit, Vermiculit) Vermiculit mit einem Schmelzpunkt über 1300 Grad Celsius ist inertes Material. Es schwächt die Brennstoffkettenreaktion. Lokale Orte des Vermiculit bleiben erhalten.
- Mikroglaskugeln
- Bentonit
- Silikate
- Phosphor (rot), Phosphorverbindungen, Phosphorester Dieser Phosphor mit einem Schmelzpunkt von 44 Grad Celsius lässt bei der Pyrolyse von Thermoplasten nicht brennbare Gase entstehen. In der kondensierten Phase können phosphorhaltige Flammschutzmittel die Verkohlung fördern. Der Phosphor wird vorzugsweise in Granulatform zugegeben, wobei jeder Granulat-Partikel mit Kunststoff umhüllt ist und ein Kunststoff mit deutlich höherem Schmelzpunkt als depolymerisiertem Lignin gewählt ist.

### -Schwefel (gelb)

Der Schwefel wird vorzugsweise in Gramulatform zugegeben, wobei jeder Granulat-Partikel mit Kunststoff umhüllt ist und ein Kunststoff mit deutlich höherem Schmelzpunkt als das Lignin/Ligninderivat gewählt ist. Dieser Schwefel mit einem Schmelzpunkt von 115 Grad Celsius hat eine ähnliche Funktion wie Phosphor.

### - Talkum

Das Lignin wird in der Regel aus Holz gewonnen. Das Lignin kann aber auch aus anderen Pflanzen als Bäumen gewonnen werden. Das Lignin füllt die Zwischenräume zwischen den Cellulosefasern des Holzes. Bei der Cellulose-Gewinnung ist das Lignin bzw. Ligninderivat ein Nebenprodukt. Je nach Verfahren bei der Cellulose-Gewinnung unterscheidet sich das Lignin/Ligninderivat in seinen Eigenschaften wie oben beschrieben und ist gar nicht oder in erheblichem Umfang mit Salzen belastet. Es gibt mechanische Verfahren, bei denen das Lignin gar keine oder nur wenige Ligninderivate anfallen. Bei den üblichen Gewinnungsverfahren fallen dagegen nur Derivate an. Neben dem Herstellungsverfahren wird die Eigenschaft des Lignins/Ligninderivats auch von der Holztype, aus der das Lignin gewonnen wurde, beeinflusst. Zur Verdeutlichung ist in der kommenden Tabelle eine Übersicht des Einflusses von Holzart + Verfahren auf die Molekulargewichtsverteilung dargestellt:

| **Holzart** | | Lignin Herkunft | | Lignin Herkunft | | Lignin Herkunft | | Lignin Herkunft | |
|---|---|---|---|---|---|---|---|---|---|
| | | Kraft | | Lignosulfonate | | Native | | vorbehandelte | |
| | | | | | | gemahlen | | Biomasse | |
| | | **Mn** | **Mw** | **Mn** | **Mw** | **Mn** | **Mw** | **Mn** | **Mw** |
| | | [g/mol] | [g/mol] | [g/mol] | [g/mol] | [g/mol] | [g/mol] | [g/mol] | [g/mol] |
| Hardwood - Laubholz - | **Esche** | | | 2.000 | 12.000 | | | 1.000 - 2.400 | 9.600-45.000 |
| Hardwood - Laubholz - | **Pappel** | | | 1.000 - 2.500 | 2.200 - 10.000 | | | 450-1.700 | 850-5.200 |
| Hardwood - Laubholz - | **Eukalyptus** | 400-1.400 | 1.300 - 5.000 | 1.800 - 2.200 | 5.700 - 6.300 | 2.000 - 8.700 | 6.700 - 35.000 | 1.500 | 5.600 |
| Hardwood - Laubholz - | **Birke** | 300-7.900 | 900-20.000 | | | | | 1.350 - 2.000 | 9.000 - 12.300 |
| Softwood - Nadelholz - | **Schilf** | | | | | | | 700-1.390 | 1.980 - 3.800 |
| Softwood - Nadelholz - | **Kiefer/Fichte/Tanne Mischung** | 1.000 - 3.400 | 4.400 - 9.880 | | | 2.500 - 7.600 | 7.400 - 38.000 | | |
| Softwood - Nadelholz - | **Tanne** | | | | | 2.800 - 7.700 | 7.500 - 57.000 | | |
| Softwood - Nadelholz - | **Kiefer** | 600-5.550 | 1.720 - 18.050 | 3.300 - 8.500 | 7.000 - 31.000 | 7500 | 13.500 | 3.000 | 54.00 |
| Softwood - Nadelholz - | **Fichte** | | | 3.200 - 13.0000 | 4.600 - 63.500 | 1.500 - 113.00 | 10.000 - 99.000 | | |
| Hardwood - Laubholz - | **Oliven** | | | | | | | 2.050 - 5.030 | 3.675 - 13.025 |

| | | | | | | | | | |
|---|---|---|---|---|---|---|---|---|---|
| Mn = Zahlenmittel der Molmasse, Mw = Massenmittel der Molmasse | | | | | | | | | |

Die Werte variieren je nach botanischer Herkunft des Lignins und Aufschlussverfahren.
Bei chemischer Vorbehandlung wird zum Beispiel Natriumsulfit oder Nartriumhydroxid eingesetzt.
Die meist angewendeten Verfahren zur Cellulose-Gewinnung sind chemische Verfahren. Dazu gehören Sulfatverfahren, Sulfitverfahren und Sodaverfahren. Bei anderen, weniger häufig angewendeten Verfahren wird Ethanol und Natronlauge oder Natriumsulfit und Ethanol oder Essigsäure und Ameisensäure oder Ameisensäure und Wasserstoffperoxid angewendet oder erfolgt ein enzymatischer Aufschluß.

Das Lignin bzw. Ligninderivat kann feinkörnig anfallen, zum Teil pulverförmig. Nach der Erfindung wird das Eintragen des Lignins bzw. Ligninderivats in den Extruder durch ein Stopfwerk in dem Aufgabetrichter des Extruders unterstützt. Im einfachsten Fall ist das Stopfwerk ein Rührer. Die Förderwirkung der bekannten Rührer ist gering. Vorzugsweise findet ein aufrechtstehender Extruder als Stopfwerk Anwendung, nachfolgend Stopfextruder genannt. Der Stopfextruder kann unmittelbar an das Extrudergehäuse angeflanscht werden. Die Förderwirkung des Stopfextruders ist um Vieles besser als die Förderwirkung eines Rührers. Hinzu kommt, dass der Stopfextruder bereits mit einer Kühlvorrichtung versehen ist, Die Kühlvorrichtung wirkt einem durch Wärme verursachten Verklumpen des Lignins im Einlauf des zur Verarbeitung der Einsatzstoffe vorgesehenen Extruders entgegen.

Eine nicht komplette Trocknung des Lignins/Ligninderivats hat feuchtes Lignin/Ligninderivat zur Folge. Die Feuchte kann im Extruder verdampft und abgezogen werden kann. Dazu eignen sich besonders modulweise aufgebaute Extruder. Dann kann zunächst in einem ersten Modul zumindest allein das feuchte Lignin eingefüllt und auf eine Temperatur gebracht werden, bei der die Feuchtigkeit gut abdampft, aber das Lignin/Ligninderivat noch nicht erweicht. Vorzugsweise liegt diese Temperatur mindestens 10 Grad Celsius unter der Erweichungstemperatur des jeweiligen Lignins/Ligninderivats, noch weiter bevorzugt mindestens 20 Grad Celsius und höchst bevorzugt mindestens 30 Grad Celsius unter der Erweichungstemperatur des jeweiligen Lignins/Ligninderivats.

Beim Extrudieren kann entstandener Dampf abgezogen werden.
Das Abziehen des Dampfes wird als Entgasen bezeichnet. Im einfachsten Fall ist dazu eine an den Extruder angeflanschte Saugleitung ausreichend. Soweit das Lignin dazu neigt, unter der Saugwirkung des Saugzuges dem Dampf bei seinem Weg aus dem Extruder zu folgen, empfiehlt es sich, an der Öffnung für den Saugzug im Extrudermantel ein Sieb anzuordnen. Von Vorteil ist, wenn das Sieb mit der Innenseite des Extruders bündig abschließt. Dann bewirkt die Schnecke in diesem Modul zugleich eine Reinigung des Siebes. Gegebenenfalls ist sogar ein geringes (zum Beispiel bis 2mm) Zurücksetzen des Siebes gegenüber der Innenfläche von Vorteil. Dann sammelt sich vor dem Sieb eine definierte Schicht getrockneten Lignins/Ligninderivat, das als zusätzliche Filterschicht wirkt.

Bei modulweise zusammen gesetzten Extrudern ist der in Extrusionsrichtung erste Modul das Füllteil, in den vorzugsweise das Lignin aufgegeben wird. Im ersten Modul findet eine Erwärmung des Lignins statt. Dabei verdampft Feuchtigkeit. Mit weitergehender Erwärmung schmilzt das Lignin auf. Das Polystyrol kann danach und in einem weiteren Modul mit dem Lignin zusammengebracht werden.

Alternativ wird das Polystyrol zusammen mit dem Lignin und anderen Feststoffen direkt in das erste Füllteil gegeben und zusammen erwärmt, erweicht und aufgeschmolzen.

Das Polystyrol kann in Granulatform in den Extruder aufgegeben werden. Dann hilft die in dem Extruder befindliche Ligninmenge bei der zum Aufschmelzen des Polystyrols erforderlichen Erwärmung.
Von Vorteil ist, wenn das Polystyrol in schmelzflüssiger Form in den weiteren Modulen eingetragen wird. Vorzugsweise geschieht das dann über einen Seitenarmextruder, der zugleich die Schmelzleistung aufbringt. Der Seitenarmextruder hat seine Bezeichnung davon, dass er wie ein seitlicher Arm an dem Modul des Hauptextruders angeordnet ist. Der Hauptextruder ist der Extruder bzw. der modulweise aufgebaute Extruder, in dem die Mischung von Polystyrol und Lignin stattfindet.

Üblicherweise werden auch die Extruder als Seitenarmextruder bezeichnet, die oben auf oder unten an dem Modul des Hauptextruders angeflanscht sind.

Zusammen mit dem Polystyrol können auch Additive und weitere Zuschläge in dem zweiten Modul aufgegeben werden.

Der Seitenarmextruder kann sowohl in seitlicher Anordnung als auch in senkrechter Anordnung auf dem Modul als Doppelschneckenextruder ausgebildet sein.

In dem zweiten Modul und/oder in einem weiteren Extrudermodul findet eine Mischung/Dispergierung des eingebrachten Lignins/Ligninderivats, der Additive und Zuschläge in der Schmelze statt. Für diese Aufgabe sind Module besonders geeignet, die wie Planetwalzenextruder gestaltet sind. Dabei setzt sich die Einschnecke aus dem ersten Modul als Zentralspindel in dem zweiten bzw. weiteren Modul fort.

Bei der Verwendung einer Planetwalzenextruderbauart für den zweiten Modul und/oder das weitere Modul kann die Korngröße nicht aufschmelzender Feststoffe so gewählt werden, dass diese Feststoffe durch diese Module hindurch gehen. Das dazu erforderliche Spiel zwischen den Extruderteilen ist bei größeren Extruderbaugrößen ohnehin gegeben. In anderen Fällen kann das erforderliche Spiel bei der Extruderherstellung erzeugt werden.

Bei der Extrusion der Einsatzmischung wird der Schmelze auch ein Treibmittel oder mehrere Treibmittel zugesetzt. Das bzw. die Treibmittel werden dem Extruder in flüssiger oder superkritischer Form zugegeben. Diesen Aggregatzustand erreicht man dadurch, dass man das Treibmittel vor der Zugabe in den Extruder unter Druck setzt.

Das Treibmittel wird üblicherweise zwischen zwei Planetwalzenextrudermodulen mittels eines Ringes in die Schmelze eingedüst. Der Ring ist entsprechend hohl ausgebildet und an den schmelzeberührten Flächen mit Austrittsöffnungen für die Treibmittelflüssigkeit versehen. Die Treibmittelflüssigkeit wird durch eine Leitung zugeführt, die in dem Spalt zwischen den beiden Planetwalzenextrudermodulen zu dem Ring verläuft. Unter dem im Planetwalzenextrudermodul herrschenden Druck wird das Treibmittel an einer Ausdehnung gehindert und von den umlaufenden Planetspindeln und der Zentralspindel in der Schmelze fein verteilt.

Alternativ kann das Treibmittel nach dem kompletten Aufschmelzen und unter Druck setzen der Polymer-Lignin-Schmelze in einem Doppelschneckenextruder zugegeben werden.

Anschließend wird die Schmelze durch eine oder mehrere Düsen hindurch aus dem Extruder gedrückt.

Bei einer einzigen nachgeordneten Düse ist die Düse eine Breitschlitzdüse. Der aus der Breitschlitzdüse in die Umgebungsluft austretende Schmelzestrang schäumt um ein Vielfaches auf. Dabei findet die aufschäumende Schmelze an den Innenwänden des dem Extruder nachgeschalteten Kalibrators eine Ausdehnungsgrenze. An den Innenwänden des Kalibrators bildet sich eine Haut an dem Schmelzestrang. Die Haut stabilisiert den Schmelzestrang nach Verlassen des Kalibrators bei der Abkühlung.

Wie oben schon erläutert, lassen sich Polystyrolschaumprodukte auch aus Polystyrolschaumpartikeln herstellen, die durch Extrusion und Granulierung entstehen.
In diesem Fall wird eine Vielzahl nachgeordneter Düsen genutzt, um eine entsprechende Anzahl von feinen Schmelzesträngen herzustellen, die anschließend in geringen Abständen abgelängt werden, so dass ein Granulat entsteht, das als Ausgangsstoff für weitere Bearbeitungsvorgänge dient. Die Granulierung erfolgt unter Druck und unter Wasser, so dass das Treibmittel in dem Schmelzegranulat nicht aufschäumt und man so treibmittelbeladene Polytyrol/Lignin-Partikel (Beads) erhält. Zugleich bewirkt das Wasser, dass die einzelnen Partikel schnell abkühlen und nicht miteinander verklumpen.
Das Verfahren wird als Unter-Wasser-Granulierung bezeichnet.
Das Granulat hat wahlweise einen Durchmesser von höchsten 2 mm, weiter vorzugsweise von höchstens 1,8mm und weiter bevorzugt von höchstens 0,6mm. Der kleinste Durchmesser beträgt vorzugsweise 0,4mm.

Die so gewonnenen Partikel, die ein Treibmittel enthalten, können in transportfreundlicher und lagerfreundlicher Form an Abnehmer geliefert werden, um dort aufgeschäumt zu werden und in Formteilautomaten zu Formteilen miteinander verschweißt/versintert zu werden oder in Formteilautomaten zu Formteilen verschweißt/versintert zu werden. Die Formteile können ohne weitere Bearbeitung eine Anwendung erfüllen, zum Beispiel im Verpackungsbereich.
Die Blöcke werden nach entsprechender Ablagerung zu Platten geschnitten, die zu Bauzwecken verwendet werden.

Die Eigenschaften der nach dieser Erfindung hergestellten XPS-Platten und EPS-Platten werden nach folgenden europäischen Normen geprüft:
- Wärmedurchlasswiderstand und Wärmeleitfähigkeit nach EN 12667
- Dicke nach EN 823
- Klassifizierung des Brandverhaltens EN 13501-1
- Dimensionsstabilität unter definierten Temperaturbedingungen oder definierten Temperatur- und Luftfeuchtebedingungen nach EN 1604
- Druckspannung bei 10 % Stauchung oder Druckfestigkeit nach EN 826
- Zugfestigkeit senkrecht zur Plattenebene nach EN 1607
- Wasseraufnahme bei vollständigem Eintauchen nach EN 12087, Verfahren 2A

In den Ausführungsbeispielen wurde folgende Rohstoffe eingesetzt:
Vom Polystyrol (PS) wurden die Typen Styron 660 (MFI (200°C/5kg) = 7, Vicattemperatur = 107 °C, Firma Trinseo) und PS153F (MFI (200°C/5kg) = 7,5, Vicattemperatur = 101 °C, Firma Ineos Styrolution) eingesetzt. Es handelt sich um Standardpolystyrole mit einem mittleren Molekulargewicht zwischen 180.000 und 210.000 g/mol.
Als Ligninderivate wurden Lineo™ Classic (es handelt sich um Kraft-Lignin, Ligningehalt 92 - 97 %, Mw =5500 - 7500, Firma Stora Enso) und Domsjö Lignin DS10 (es handelt sich um Ligninsulfonat, Wassergehalt < 5%, Mw= 9000-11000, Firma Domsjö Fabrica) verwendet. Diese Ligninderivate sind Nebenprodukte aus der Cellulosegewinnung und haben bei dem Gewinnungsverfahren wie auch durch Nachbehandlung nur eine mäßige Temperaturbelastung erfahren. Mäßig heißt hier: nicht über 145Grad Celsius.

Ca(OH)₂, CO₂, DME, Ethanol und Pentan (80 n-Pentan/20 iso-Pentan) wurden als reine Substanzen mit einer Mindestreinheit von 99% verwendet. Diese Li

In Technikumsversuchen wurden PS und Lignin in den in den folgenden Tabellen (Tabelle 1 und 2) beschrieben Anteilen auf einem Zweischneckenextruder (Berstorff ZE 30) aufgeschmolzen bis zu einer Schmelzetemperatur von 185°C. Diese Temperatur kann wahlweise auch auf bis zu 230 ° erhöht werden. Dabei stand die Schmelze unter einem Druck von 200 bar und der Durchsatz betrug dabei 40 kg/h. Bei 185°C wurden die aufgeführten Treibmittel unter Druck verflüssigt zu der Schmelze gegeben. Diese wurde folgend in einem Einschneckenkühlextruder (Berstorff KE60) homogenisiert und abgekühlt auf 80 °C und der Druck reduziert auf 80 bar. Die durch eine Breitschlitzdüse austretende Schmelze schäumt unter Normaldruck auf und wurde durch zwei Kalibratorplatten auf die in der Tabelle angegebene Dicke eingestellt.

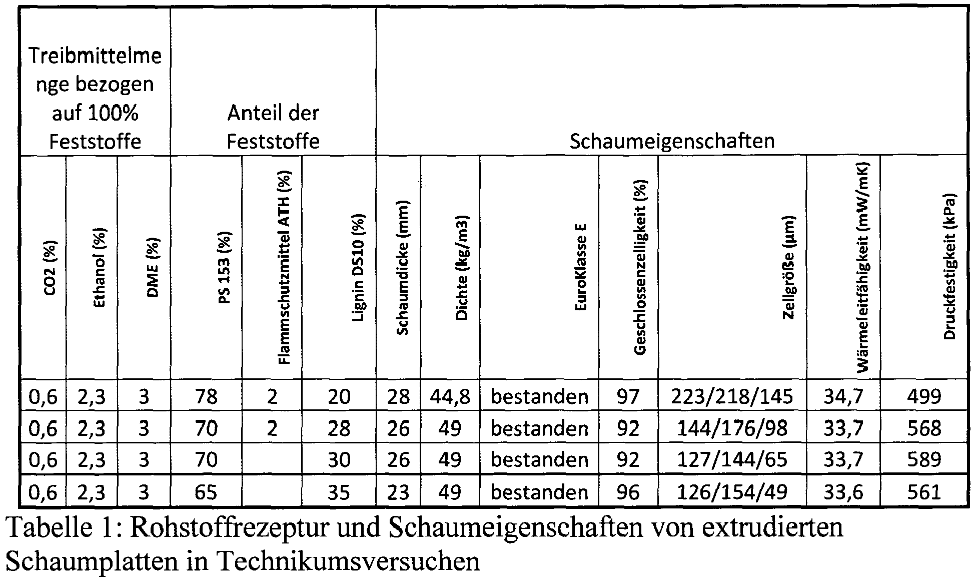

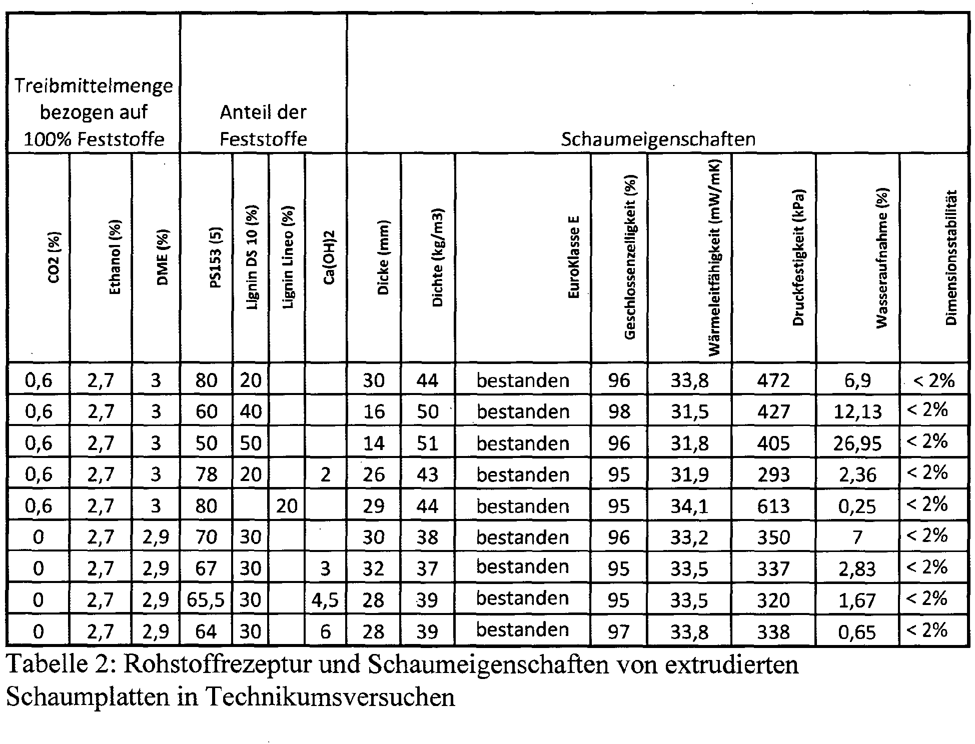

In Produktionversuchen wurden PS und Lignin in den in der folgenden Tabelle 3 beschrieben Anteilen auf einem Zweischneckenextruder (Berstorff TSK 105) aufgeschmolzen bis zu einer Schmelzetemperatur von 185°C. Dabei stand die Schmelze unter einem Druck von 200 bar und der Durchsatz betrug dabei 500 kg/h. Bei 185°C wurden die aufgeführten Treibmittel unter Druck verflüssigt zu der Schmelze gegeben. Diese wurde folgend in einem Einschneckenkühlextruder (Berstorff TES 250) homogenisiert und abgekühlt auf 80 °C und der Druck reduziert auf 80 bar. Die durch eine Breitschlitzdüse austretende Schmelze schäumt unter Umgebungsdruck und Raumtemperatur auf und wurde durch zwei Kalibratorplatten auf die in der Tabelle angegebene Dicke eingestellt.

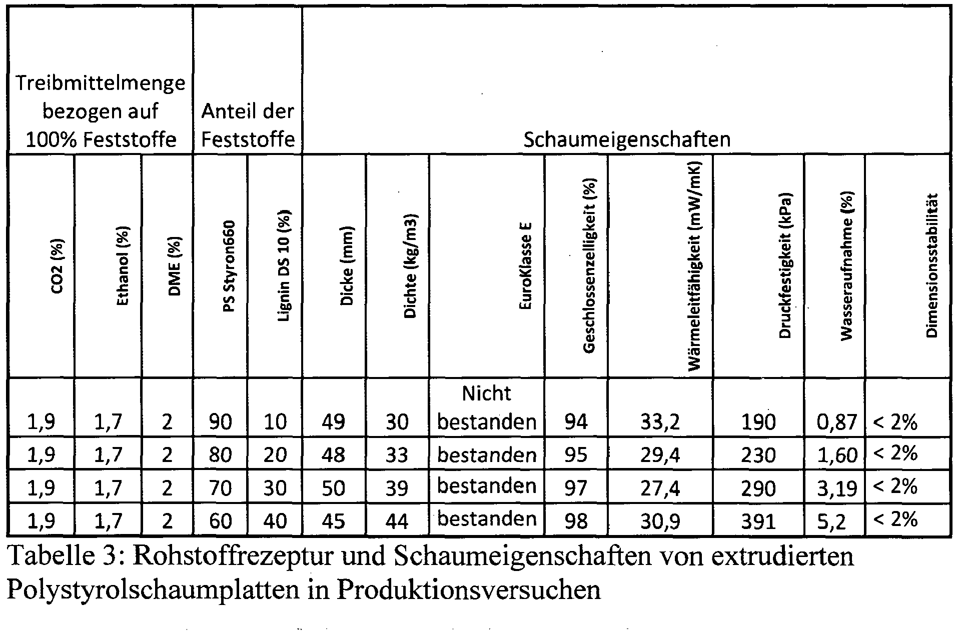

In den Technikumsversuchen für expandierte PS/Ligninschaumplatten wurden die in der Tabelle 4 angegebene Feststoffe mit Hilfe eines Zweischneckenextruders aufgeschmolzen und homogenisiert, anschließend wurde bei einem Druck von 200 bar und 190 °C das in der Tabelle 4 angegebene Treibmittel zudosiert. Die Schmelze wird abgekühlt, durch eine 300 °C warme Lochplatte mit 0,8 mm Löchern in eine Unterwassergranulieranlage mit 9 bar Überdruck und 50 °C Wassertemperatur extrudiert. Hinter der Lochplatte wird die austretende gasbeladene Extrusionsmasse mit umlaufenden Messern (Anzahl 7 / Messergeschwindigkeit 5000 U/min) abgeschlagen. Die erhaltenen gasbeladenen PS/Lignin Beads wurden abzentrifugiert, getrocknet und gasdicht gelagert.

Die gasbeladenen Beads wurden in einer modifizierten Industrieanlage vorexpandiert und anschließender in einem Formteilautomaten der Firma Erlenbach zu Formteilen verarbeitet.

Bei der Vorexpandierung werden aus den kompakten Beads lose (ohne Anschmelzen von mehreren Beads) geschäumte Beads mit Mengen an Rest-Treibmitteln zur Weiterverarbeitung. Als Energiequelle diente hier Wasserdampf, aber auch andere Energiequellen sind möglich. Im Versuchsaufbau wurde der Wasserdampf bei unterschiedlichen Drucken gefahren, so dass ein vorgeschäumtes Produkt mit konstanter Schüttdichte entstand. In allen Versuchen wurden die Beads mit einer Mischung aus Stearaten beschichtet. Es wurden 500 g Beads eingewogen und eine Schüttdichte von 20g/l erzielt. Vor der Weiterverarbeitung im Formteilautomaten wurden die vorgeschäumten Beads 48 Stunden gelagert.

Das vorgeschäumte rieselfähige Material wird in eine offene Form gefördert. Die geschlossen Form wird nun von allen Seiten mit Wasserdampf durchströmt. Nach einer einstellbaren Verweilzeit der Masse wird die Form geöffnet und der Formkörper wird über Hydraulikstöße aus der Form entfernt.

Beispielhaft wurden folgende Prozessparameter eingestellt. Querdampf Oben (0,8 bar/6 - 8 sec), Querdampf Unten (1,2 - 1,7 bar /10 - 20 sec), Autoklav Oben/Unten (0,6 - 0,8 bar / 5 sec), Kondensier Zeit 5sec, Kühlungszeit 250 - 400 sec, Nachkühlen Druck 0,5 bar, Nachkühlen Zeit 10 sec und Stabilisierungszeit 25 - 130 sec.
Die entstehenden Partikelschaumblöcke wurden zu EPS-Platten gleicher Dicke geschnitten und den Produkt-Prüfungen unterworfen.

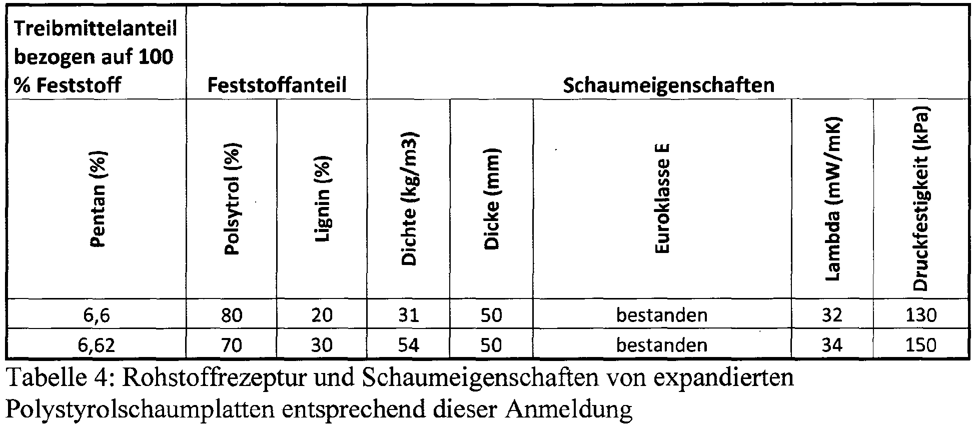

An diesen Versuchen ist überraschend, daß keine Flammschutzmittel verwendet wurden und die Brandschutztests entsprechend der Euroklasse E nach geltender Norm gleichwohl bestanden wurden.

## Patentansprüche

1. Herstellung flammgeschützter/brandgeschützter Schaumprodukte aus einer Mischung mit ataktischem Polystyrol,
- durch Einführen von Einsatzstoffen in einen Extruder, einschließlich des Polystyrols und Lignin und/oder Ligninderivaten
- durch Aufschmelzen des Polystyrols und Vermischen mit Lignin und/oder Ligninderivaten sowie anderen Einsatzstoffen,
- durch Einführen eines oder mehrerer Treibmittel in flüssiger/superkritischer Form in den Extruder
- durch Austragen der Schmelze durch eine Düse in eine Umgebung mit geringerem Druck in einen Kalibrator unter Aufschäumung der Schmelze,
- durch Bildung eines Extrusionsstranges
- durch Abkühlen des Schmelzestranges und Bearbeitung des Extrusionsstranges,
- durch Ablängen des Extrusionsstranges zu Platten
**oder**
- durch Einführen von Einsatzstoffen in einen Extruder, einschließlich des Polystyrols und Lignins und/oder Ligninderivats
- durch Aufschmelzen des Polystyrols und Vermischen mit Lignin und/oder Ligninderivaten und anderen Einsatzstoffen,
- durch Einführen eines oder mehrerer Treibmittel in flüssiger/superkritischer Form
- durch Austragen der Schmelze durch eine Vielzahl kleiner Düsen als dünne Schmelzestränge in eine Umgebung mit hohem Druck und durch Zerkleinerung der Schmelzestränge im Wege der Unterwassergranulierung,
- Aufschäumen des Granulates vor der Einführung in einen Formteilautomaten
- Verschweißen oder Versintern der entstandenen Schaumpartikel im Formteilautomaten zu Schaumblöcken
- Aufteilen der Schaumblöcke zu Platten **dadurch gekennzeichnet,**
**dass** ein aus der Cellulosegewinnung als Nebenprodukt anfallendes, Lignin oder Ligninderivat, vorzugsweise Kraft-Lignin oder Ligninsulfonat, welches im Gewinnungsverfahren und durch Nachbehandlung maximal eine Temperaturbelastung bis 145 Grad Celsius erfahren hat, unverändert mit dem Polystyrol in Mischung gebracht wird, wobei der Anteil des Lignins/Ligninderivats mindestens 20 Gew%, vorzugsweise größer 30 Gew% und noch weiter bevorzugt größer 50 Gew% ist, bezogen auf die dem Extruder zugeführte gesamte Feststoffmenge,
und **dass** die erhaltene Lignin-Polystyrol-Mischung auf ein Raumgewicht von < 100 kg/m³, weiter bevorzugt <80 kg/m³ und noch weiter bevorzugt < 60 kg/m³ aufgeschäumt wird.

2. Herstellung nach Anspruch 1,
gekennzeichnet ein Lignin/Ligninderivat,
das ein mittleres Molekulargewicht von 2000 - 60000, vorzugsweise von 3000 - 40000 und noch weiter bevorzugt von 5000 - 30000, gemessen in g/mol mit GPC, aufweist, mit dem Polystyrol in Mischung gebracht wird.

3. Herstellung nach Anspruch 1 oder 2,
**dadurch gekennzeichnet, dass** der Polymermatrix neben dem Lignin und dem Polystyrol ein weiteres thermoplastisches Polymer zugegeben wird und der Anteil des weiteren thermoplastischen Polymers nicht größer als 10Gew% der Polymermatrix ist.

4. Herstellung nach einem der Ansprüche 1 bis 3,
**dadurch gekennzeichnet, dass** der Polymermatrix noch ein Vernetzer zugegeben wird.

5. Herstellung nach einem der Ansprüche 1 bis 4,
**dadurch gekennzeichnet,**
**dass** ein Blähgrafit verwendet wird, dessen Partikelgröße kleiner 1/10 des mittleren Zelldurchmessers des Polystyrolschaumes ist, vorzugsweise kleiner 1/50 und noch weiter bevorzugt kleine 1/100 des mittleren Zelldurchmesser des Polystyrolschaumes ist.

6. Herstellung nach einem der Ansprüche 1 bis 5,
**dadurch gekennzeichnet,**
**dass** das Lignin und das Polystyrol unabhängig voneinander erwärmt werden und nach dem Aufschmelzen eine Vermischung im Extruder stattfindet.

7. Herstellung nach einem der Ansprüche 1 bis 6,
**gekennzeichnet durch** eine Zwangsführung feinkörniger und staubförminger Ausgangsstoffe bei der Aufgabe in den Extruder.

8. Herstellung nach Anspruch 7, **gekennzeichnet durch** die Verwendung eines senkrecht über der Füllöffnung des Extruders stehenden weiteren Extruders mit einer Kühlung zum Eintragen des Lignins in den Hauptextruder.

9. Herstellung nach einem der Ansprüche 1 bis 8, **gekennzeichnet durch** eine Beheizung von in den Extruder eingefüllten feuchten Einsatzstoffen zur Verdampfung der Feuchte und anschließende Entfernung des Dampfes **durch** Entgasung und **durch** eine Zugabe flüssigen Treibmittels nach der Entgasung,

10. Herstellung nach einem der Ansprüche 1 bis 9, **dadurch gekennzeichnet, dass** das Lignin bzw. Ligninderivat zuerst zu Granulat kompaktiert wird oder dass zunächst aus Lignin bzw. Ligninderivat mit einer Teilmenge des Polystyrols ein Compound in Granulatform erzeugt wird und anschließend mit den übrigen Einsatzstoffen im Extruder zusammengeführt wird.

11. Herstellung nach Anspruch 10, **dadurch gekennzeichnet, dass** die zum Compoundieren verwendete Teilmenge des Polystyrols höchstens 80Gew%, vorzugsweise höchstens 70Gew% und noch weiter bevorzugt höchstens 50Gew% des gesamten Polystyrols ist.

12. Herstellung nach einem der Ansprüche 1 bis 11, **gekennzeichnet durch** die Zugabe von Aluminiumhydroxid (ATH) oder Magnesiumhydroxid (MDH) in die Einsatzmischung mit einem Anteil von 0,5 bis 10 Gew%, bevorzugt 1 bis 8 Gew% und noch weiter bevorzugt mit einem Anteil von 1,5 bis 6 Gew% bezogen auf die dem Extruder zugeführte gesamte Feststoffmenge.

13. Herstellung nach einem der Ansprüche 1 bis 12, **gekennzeichnet durch** die Zugabe von Calciumhydroxid in die Einsatzmischung mit einem Anteil von 0,5 bis 10 Gew%, bevorzugt 1 bis 8Gew% und noch weiter bevorzugt mit einem Anteil von 1,5 bis 6Gew%, bezogen auf die dem Extruder zugeführte gesamte Feststoffmenge.

14. Polystyrolschaumplatte aus ataktischem Polystyrol, **dadurch gekennzeichnet, dass** die Platte mindestens 20Gew%, vorzugsweise zu mehr als 30Gew% und noch weiter bevorzugt zu mehr als 50Gew% aus Lignin oder Ligninderivat, vorzugsweise aus Kraft-Lignin oder Ligninsulfonat besteht, wobei sich die Prozentangaben auf den Feststoffanteil der Platte beziehen,
und wobei die Platte eine Dichte von kleiner 100 kg pro Kubikmeter, vorzugsweise kleiner 80 kg pro Kubikmeter und noch weiter bevorzugt kleiner 60 kg pro Kubikmeter aufweist.

15. Polystyrolschaumplatte nach Anspruch 14, **dadurch gekennzeichnet, daß** das Lignin oder Ligninderivat in der Platte ein mittleres Molekulargewicht von 2000 bis 60000, vorzugsweise 3000 bis 40000 und noch weiter bevorzugt 5000 bis 30000 g/mol, gemessen mit GPC, aufweist

16. Polystyrolschaumplatte nach Anspruch 14 oder 15, **dadurch gekennzeichnet, dass** die Platte aus Ligninsulfonat als Ligninderivat und einem Mischungsanteil an Calciumhydroxid besteht.
